# EUROPEAN PATENT SPECIFICATION

(11) **EP 1 933 620 B1**
(45) Date of publication and mention of the grant of the patent: **05.08.2009**
(21) Application number: 06778417.3
(22) Date of filing: 05.09.2006
(51) Int. Cl.: A01N 25/02, A01N 25/30, A01N 57/20, A01P 13/00

(54) **PESTICIDE AND/OR HERBICIDE COMPOSITIONS AND METHODS OF THEIR USE**
PESTIZIDE UND/ODER HERBIZIDE ZUSAMMENSETZUNGEN UND VERFAHREN ZU IHRER VERWENDUNG
COMPOSITIONS PESTICIDES ET/OU HERBICIDES ET LEURS PROCEDES D'UTILISATION

(30) Priority: 16.09.2005 GB 0518859
(43) Date of publication of application: 25.06.2008
(73) Proprietor: Ciba Holding Inc., 4057 Basel (CH)
(72) Inventor: ROSE, Simon Alexander Hanson, Bradford West Yorkshire BD10 8WN (GB); LYONS, Lynn, Keighley West Yorkshire BD20 5TS (GB); WHITEHEAD, Mark, Wirral Merseyside CH62 5EJ (GB)
(74) Representative: Peatfield, Jeremy William
(86) International application number: PCT/EP2006/066013
(87) International publication number: WO 2007/031438

(56) References cited:
- WO-A-00/26160
- US-A- 5 525 575
- US-A1- 2001 034 304
- US-B1- 6 762 162
- WYRILL J B ET AL: "GLYPHOSATE TOXICITY TO COMMON MILKWEED AND HEMP DOGBANE AS INFLUENCED BY SURFACTANTS" WEED SCIENCE, WEED SCIENCE SOCIETY OF AMERICA, CHAMPAIGN, IL, US, vol. 25, no. 3, May 1977 (1977-05), pages 275-287, XP002034447 ISSN: 0043-1745
- RUITER DE H ET AL: "MECHANISMS OF A NONIONIC AND A CATIONIC SURFACTANT IN RELATION TO GLYPHOSATE" AMERICAN CHEMICAL SOCIETY. ABSTRACTS OF PAPER. AT THE NATIONAL MEETING, AMERICAN CHEMICAL SOCIETY, WASHINGTON, DC, US, vol. 194, 1987, page AGRO40, XP009061362 ISSN: 0065-7727
- RUITER DE H ET AL AMERICAN CHEMICAL SOCIETY: "MODE OF ACTION OF A NONIONIC AND A CATIONIC SURFACTANT IN RELATION TO GLYPHOSATE" PESTICIDE FORMULATIONS - INNOVATIONS AND DEVELOPMENTS. NEW ORLEANS, AUG. 30 - SEPT. 4, 1987, MEETING OF THE AMERICAN CHEMICAL SOCIETY, WASHINGTON, ACS, US, vol. MEETING 194, 30 August 1987 (1987-08-30), pages 44-55, XP002059051

## Description

The present invention relates to pesticide and/or herbicide compositions including such compositions that are sprayable and contain at least one pesticide and/or herbicide and exhibit improved efficacy test and/or weed control. In the case of systemic herbicides a much greater uptake by plants is observed. Also included are aqueous concentrates that can be used to prepare sprayable compositions. The invention also provides a method of treating a crop area employing the composition of the invention.

It is well known in agriculture to apply various agrochemicals to growing areas by spraying. The growing areas may be crop areas, which can be very large, or smaller growing areas such as those in greenhouses. The agrochemicals applied as sprays include fertilisers, herbicides and pesticides.

Herbicides and pesticides can be supplied to the farmer in various forms, for instance as neat liquids, aqueous solutions, aqueous dispersions or slurries of solid herbicide or pesticide. It is normal practice for the manufacturer to supply the farmer with the herbicide or pesticide in the form of a neat liquid or as a high activity solution or slurry. The usual way of applying herbicides or pesticides to an area of land would be by spraying.

Various systems have been devised for convenient dosing of herbicides or pesticides. Spray pumps are well known which spray water from a spray manifold onto the area of land or crop area and which are designed so that concentrated herbicide or pesticide can be dosed into the pump, mixed with water before being sprayed.

During the spraying of herbicides and pesticides it is common to apply anti-drift agents in order to prevent the formation of fine droplets which could be carried beyond the area intended to be treated. Without the use of anti-drift agents, the spraying of herbicides and pesticides would be inefficient, first of all because there could be inadequate treatment of the land and crop areas intended to be treated and secondly the extraneous spray, if carried beyond the intended treatment zone, could for example be detrimental to other crops, land and water courses.

It is usual to combine the anti-drift agent with either the water which is fed into the spray pumps or to apply it directly into the spray pumps, usually at or shortly after the mixing zone where the water is mixed with the herbicide or pesticide. It is important that the spray drift chemical is metered at the correct dose to ensure that extraneous spray is not formed through under dosing or through overdosing the spray angle is too narrow resulting in uneven distribution of the herbicide or fertiliser.

Polymers of acrylamide and other ethylenically unsaturated monomers have been used as anti-drift agents. It has been generally accepted that polymers which give optimum spray drift control are either non-ionic (eg acrylamide homopolymer) or have relatively low anionic content (e.g. 5 to 30 wt. %) and also have relatively high intrinsic viscosity, for instance above 6 dl/g. Such polymers tend to form viscous aqueous solutions unless used at low concentration. Normal practice is to mix the polymer powder or reverse phase emulsion form with water directly into the spray tank so as to form an aqueous solution of polymer. However, this has the problem that emulsion polymers can be difficult to activate in this situation and polymer powders take a long time to dissolve. It is sometimes necessary to use more polymer as a result of inefficient dissolution of the polymer. Normally in order to minimise the problems with dissolution it would be usual to use polymers of intrinsic viscosity in the range 6 to 15 dl/g. Typically the water containing the pesticide or herbicide would comprise polymer at a concentration in excess of 0.05wt.%.

Canadian 1023264 (Vartiak) describes dilute aqueous sprayable formulations using polymers in the form of reverse phase emulsions to an aqueous system containing pesticides or herbicides and surfactants to prepare sprayable formulations.

US 6534563 (Bergeron) discloses formulations comprising pesticides or agents for controlling plant growth. The plant protection formulations can be used in the presence of an aqueous solution and conventionally sprayed onto the plant to be treated.

For some applications it is usual to combine two or more agrochemicals. For instance in the application of herbicides, especially systemic herbicides, it is usual to combine the treatment with a fertiliser, such as for instance ammonium sulphate (AMS). The fertiliser stimulates the growth of unwanted plants causing them to take up much more water, together with the herbicide, through the root system. This ensures a more efficient uptake and distribution of herbicide throughout the plant. In this instance the fertiliser may be regarded as an adjuvant in that it increases the efficacy of the herbicide. Thus a fertiliser used in combination with a herbicide is termed a herbicide adjuvant

Polymeric anti drift agents or anti deposition agents used with herbicides such as glyphosate tend to be added to the spray tank as a separate component to the herbicide formulation. The addition of such polymers directly into a pesticide or herbicide formulation tends to be less favorable for a number of reasons. Generally high concentrations of polymeric materials can be incompatible with both the surfactant and the pesticide or herbicide in aqueous concentrates. Furthermore the polymers may not be sufficiently soluble in the concentrates containing high concentrations of pesticide/herbicide and surfactant. In addition due to the low activity of conventional polymers it is normally necessary to add the polymers at high concentrations and in an aqueous concentrate this generally would not be possible without first reducing the pesticide and/or herbicide active level or the surfactant level. Another disadvantage of conventional polymeric anti drift agents or anti deposition agents is that they tend to viscosity the formulations and this may not be acceptable.

WO-A-00/26160 overcomes some other disadvantages of conventional formulations. This document describes an agrochemical liquid concentrate containing herbicide or pesticide and an inorganic water-soluble compound adjuvant in an amount of at least 10% by weight. The concentrate includes an anti-drift agent which is a water-soluble anionic polymer in an amount up to 1.9 wt.% based on the weight of the concentrate. The concentrate would be diluted in a spray tank usually at least 30 fold, for instance at least 50 fold to form a sprayable composition. The systemic herbicide glyphosate is described as one example of an agrochemical. This composition provides significant improvements in reducing spray drift.

An article by Mickey R. Brigance entitled, "Effect of Polyacrylamide Formulations on Bioefficacy of Glyphosate" (Proceedings of the 7th International Symposium on Adjuvants for Agrochemicals, 8 to 12 November 2004 (ISBN No. 1-92 0-01716-X)) describes the evaluation of sprayable herbicidal compositions of glyphosate and the enhancement by polyacrylamides in simple and multifunctional tank mix formulations. The study found that the higher surfactant loaded glyphosate formulations showed smaller increases in efficacy from the polyacrylamide inclusion and that the glyphosate formulations with very low or no surfactants showed the greatest efficacy increase. This study considers drift suppression by reducing fine droplets and reducing droplet bounce for herbicidal formulations.

US 5525575 (Chamberlain) describes an aqueous concentrate that can contain polymers. However, the polymer must have low molecular weight and preferably this is such that is presence in composition does not substantially affect the spray pattern on the composition.

UK patent application 0503152.1 (internal attorney docket number AG/322371/P1) unpublished at the priority date of the present application; describes a sprayable foliar feed composition comprising, water containing therein,
i) at least one foliar feed plant nutrient,
ii) 40 to 1000 ppm of at least one water-soluble polymer, and
iii) 40 to 5000 ppm of at least one surfactant.

This disclosure reveals a composition providing acceptable or improved spray drift and droplet bounce and that the same time provides a significant reduction in droplet runoff.

U.S. 5525575 describes the incorporation of polymers into pesticide or herbicide compositions in order to improve the performance of the actives. It is stated that the polymer may improve transport of the active through the cell wall of the plant. The polymers described all exhibit intrinsic viscositys off below 3 dl/g. Polymers of this molecular weight would not reduce spray drift. Copolymers of acrylamide with dimethyl amino ethyl acrylate (methylchloride quaternary salt) are mentioned but it is stated that the acrylamide content of these materials must be greater than 80%. We have found that these formulations tend to give inadequate droplet bounce control and drift control.

US 6288010 describes the use of anionic polymer in concentrated salts, primarily ammonium sulphate. The polymers mentioned would not be incorporated easily into glyphosate formulations.

U.S. 2004 0058821 refers to the use of anionic and non-ionic polymer either as additives within a tank mix or pesticide formulations. The compatibility of the polymer is improved by co formulating the polymer with a salt, usually ammonium sulphate.

U.S. 2001 0034304 refers to the addition of polymeric deposition agents within a pesticide. Specifically mentioned are cationic guar gum and/or polyacrylamides which are exemplified as anionic polymers of acrylamide. The example describes compositions comprising high levels of polymer and employing salts such as ammonium sulphate in order to achieve a stable formulation. The exemplified formulations appear to be saturated with little possibility for the glyphosate formulation to include additional surfactant. U.S. 2004 0211234 describes similar compositions.

US 6210696 is concerned with low molecular weight copolymers of dimethyl amino ethyl acrylate with water in soluble monomers such as alkyl acrylates to stabilize dispersions of oil. The polymers described would be unsuitable as anti drift agents due to their low water solubility and low molecular weight.

There still exists a need to provide a pesticide or herbicide formulation that provides significantly improved spray drift control. It would also be desirable to provide a composition that enables improved deposition and penetration of the active whilst at the same time improving spray drift control.

Furthermore, prior art formulations generally cannot be formulated at concentrations that give control of droplet bounce and that the same time adequately controlling deposition. Normally high levels of surfactant need to be included in the formulation to provide any balance of droplet bounce and control of deposition.

According to the present information we provide a pesticide or herbicide composition that is an aqueous concentrate which is dilutable to form a sprayable formulation comprising, water containing therein,
i) at least one pesticide or herbicide active and
ii) a spray drift control agent comprising a spray drift control agent comprising at least one water-soluble cationic polymer that has been formed from ethylenically unsaturated monomers and
iii) at least one cationic surfactant
in which the at least one cationic polymer exhibits an intrinsic viscosity of at least 4 dl/g and the cationic polymer exhibits a cationic charge density of at least 3 mEg/g and/or is formed from at least 50 wt.% cationic monomeric repeating units.

In a further aspect of the present invention we also provide a method of treating a crop area or an area of land with a pesticide or herbicide which comprises providing an aqueous concentrate,
said aqueous concentrate comprises water and containing therein,
i) at least one pesticide or herbicide active and
ii) a spray drift control agent comprising at least one water-soluble cationic polymer that has been formed from
   ethylenically unsaturated monomers and
iii) at least one cationic surfactant,
diluting the aqueous concentrate in a spray tank to form a sprayable formulation and then distributing the sprayable formulation over the crop area or area of land,
in which the at least one cationic polymer exhibits an intrinsic viscosity of at least 4 dl/g and the cationic polymer exhibits a cationic charge density of at least 3 mEq/g and/or is formed from at least 50 wt.% cationic monomeric repeating units.

We have found that the inclusion of the water-soluble cationic polymers into the pesticide or herbicide formulation significantly reduces the losses of spray formulation. In addition the composition reduces droplet bounce and maximizes deposition of the pesticide or herbicide, especially when surfactants are included in formulation. This leads to improved efficacy of the pesticide or herbicide. We have found that even low levels of said cationic polymer optionally with low levels of surfactant provide excellent control of droplet bounce.

In general the herbicide or pesticide composition of the present invention is provided as an aqueous concentrate. This aqueous concentrate is then diluted to form the sprayable formulation which can then be sprayed on to a crop area or an area of land to be treated. Generally the aqueous concentrate is diluted from 20 to 100 fold to give the desired concentration of pesticide and/or herbicide and also the desired concentration of cationic polymer.

Alternatively the herbicide or pesticide may initially be provided as an aqueous concentrate, optionally containing surfactant, and this is diluted to form the sprayable formulation into which the cationic polymer is combined prior to spraying. The cationic polymers may be added directly to the spray tank, either as an aqueous stock solution, inverse emulsion or as a partially dehydrated polymer dispersion in oil (liquid dispersion product).

In the composition at least one surfactant is included. The exact choice of surfactant will depend upon the particular pesticide or herbicide used, types of plant, choice of polymer and the location. Effective results are obtained when the surfactant is selected from tallow amine ethoxylates. The at least one surfactant should be cationic or at least a free base amine that can be rendered cationic. A particular preferred surfactant is a tallow amine ethoxylate. Usually the tallow amine ethoxylate is 15 to 20 mole ethoxylate units, although 5 mole ethoxylate may also be used. Although tallow amines may be regarded as non-ionic in some circumstances, they will be cationic in the aqueous concentrates of the present invention and diluted aqueous sprayable formulations formed therefrom.

The surfactant may be added to the formulation in order to improve the efficacy of the pesticide or herbicide. Typically the surfactant improves the penetration of the active ingredient through the leaf surface which is important for systemic herbicides. The surfactant also aids deposition.

Generally where surfactant is included in the composition, in the aqueous concentrate it would generally the present in an amount of up to 15% by weight of total composition. Preferably however surfactant will be present in the concentrate at between 4 and 8 or 9%. On dilution the sprayable formulation may contain surfactant in an amount of up to 1100 ppm and preferably between 300 and 750 ppm.

In order to function effectively as a spray drift control agent the at least one cationic polymer used in the present invention will generally be of a molecular weight sufficient to exert an effect on the spray distribution of the sprayable formulation. That is a polymer of sufficiently high molecular weight to give spray drift control properties and is not a low molecular weight material which would act as a dispersant. Typically the polymer will have a high molecular weight, for instance at least 5 or 6 million and as much as 20 or 30 million or higher. The cationic polymer will exhibit and intrinsic viscosity of at least 4 dl/g. More preferably the polymer has an intrinsic viscosity of at least 6 dl/g. In this specification intrinsic viscosity is measured by suspended level viscometer at 20°C in 1 M sodium chloride buffered to pH 7.

Intrinsic viscosity of polymers may be determined by preparing an aqueous solution of the polymer (0.5-1% w/w) based on the active content of the polymer. 2 g of this 0.5-1% polymer solution is diluted to 100 ml in a volumetric flask with 50 ml of 2M sodium chloride solution that is buffered to pH 7.0 (using 1.56 g sodium dihydrogen phosphate and 32.26 g disodium hydrogen phosphate per litre of deionised water) and the whole is diluted to the 100 ml mark with deionised water. The intrinsic viscosity of the polymers are measured using a Number 1 suspended level viscometer at 25°C in 1 M buffered salt solution.

Preferably IV is at least 8 dl/g, more preferably at least 9 dl/g. It may be up to for instance 30 dl/g but generally it is found that the optimum combination of low viscosity of the composition and spray drift control performance is given by polymers having IV not more than about 20 or 18 dl/g. Preferably IV is not more than 16, more preferably not more than 15 dl/g. Particularly preferred IV ranges are from 9 to 13 dl/g, especially 10 to 12 dl/g.

In the present invention the water-soluble polymer is preferably substantially dissolved. That is, the polymer is taken into the solution such that substantially no visible solid material remains. The polymer may be prepared by polymerisation of a water soluble monomer or water soluble monomer blend. By water soluble we mean that the water soluble monomer or water soluble monomer blend has a solubility in water of at least 5g in 100 ml of water. The polymer may be prepared conveniently by any suitable polymerisation process.

Desirably the polymer may be prepared by reverse phase emulsion polymerisation, optionally followed by dehydration under reduced pressure and temperature and often referred to as azeotropic dehydration to form a dispersion of polymer particles in oil. Alternatively the polymer may be provided in the form of beads by reverse phase suspension polymerisation, or as a powder by aqueous solution polymerisation followed by comminution, drying and then grinding. The polymers may be produced as beads by suspension polymerisation or as a water-in-oil emulsion or dispersion by water-in-oil emulsion polymerisation, for example according to a process defined by EP-A-150933, EP-A-102760 or EP-A-126528.

The polymer may be branched but in general it is substantially linear and is not cross-linked.

The polymer is typically formed from water soluble monomer or monomer blend, usually water soluble ethylenically unsaturated monomer. The cationic content i.e. the proportion of cationic monomer in the monomer blend used to form the polymer, is variable and may be up to 100 wt. %, although more desirably high cationicity polymers are preferred. The high cationic polymers may be defined in terms of their cationic charge density. The cationic polymer comprise at least 50 wt. % cationic monomer, more preferably between 60 and 90 wt. % and/or

the polymers exhibit a cationic charge density of at least 3 mEq/g.

Desirably the cationic polymers may be prepared from at least one cationic ethylenically unsaturated monomer and optionally one or more non-ionic ethylenically unsaturated monomers. Suitable cationic monomers include dialkyl amino alkyl (meth) acrylates (including acid addition salts and quaternary ammonium salts), dialkyl amino alkyl (meth) acrylamides (including acid addition salts and quaternary ammonium salts), di allyl di alkyl ammonium halides. Particularly suitable cationic monomers are for instance the methyl chloride quaternary salt of dimethyl amino ethyl acrylate, the methyl chloride quaternary salt of di methyl amino ethyl methacrylate, acrylamido propyl tri methyl ammonium chloride, methacrylamido propyl tri methyl ammonium chloride and di allyl di methyl ammonium chloride. Nonionic monomers include acrylamide, methacrylamide, 2-hydroxy ethyl acrylate and N-vinylpyrrolidone. One particularly preferred polymer is the copolymer of acrylamide with the methyl chloride quaternary ammonium salt of di methyl amino ethyl acrylate.

When the composition of the present invention is an aqueous concentrate at least one cationic polymer may be present in an amount of between 0.1 and 2% by weight of total composition. Preferably though particularly effective results are found when the amount of cationic polymer or polymers are included in the aqueous concentrate is between 0.5 and 0.9% by weight. When the formulation is diluted to form a sprayable formulation typically the amount of polymer present will be in the range of between 25 and 150 ppm by weight.

Any suitable pesticide or herbicide may be used in the present invention. Preferred herbicide compositions include at least one systemic herbicide active such as glyphosate or glufosinate. Other examples of herbicides include phenoxy based herbicides such as 2,4-D amine salt. Preferably the systemic herbicide is glyphosate. Generally glyphosate will be present as the iso propyl amine, potassium, ammonium or other salts.

Typically the at least one pesticide or herbicide will be present in the aqueous concentrate in an amount of between 200 and 700 g/l. In the diluted to sprayable formulation the pesticide or herbicide will typically be present in an amount of between 4 and 35 g/I.

Particularly preferred aqueous concentrates comprise glyphosate as the active herbicide ingredients together with water-soluble cationic polymers of acrylamide with cationic monomers such as di methyl amino ethyl acrylate quaternized with methyl chloride. The glyphosate is usually included as the iso propyl amine salt in aqueous solution. The preferred formulation includes surfactant and this is preferably tallow amine ethoxylate (usually 15 to 20 or mole ethoxylate).

The following examples illustrate invention.

### Example 1

A cationic polymer is tested in combination with TAE 20 mole ethoxylate surfactant (AU391) supplied by Adjuvants Unlimited Inc.

Polymer A is a bead copolymer prepared by suspension polymerisation from a monomer blend containing 80% di methyl amino ethyl acrylate (DMAEA) quaternised with Methyl Chloride and 20% acrylamide with IV 7 dl/g.

Four test formulations are prepared according to the general recipe below in order to determine the effect of the various constituents:

| | |
|---|---|
| Glyphosate IPA technical grade (62% active) | = 66.0 g |
| Polymer A | = 0 or 0.75 g |
| Surfactant (TAE 20 mole ethoxylate) | = 0 or 7 g |
| Water | = to 100 g |

The test formulations above are diluted to a rate of 1% v/v for spraying. This gives an equivalent concentration of active to the rate of use in the field.

Reduced droplet bounce is demonstrated using the following method.

A Hewlett Packard 214B Pulse generator connected to a piezo-electric disc connected to a flat tipped glass nozzle with an aperture of 500 µm is used to generate droplets of ∼ 1000 µm in diameter. A glass nozzle tip is mounted 20cm above the leaf surface, which is set at an angle of 45°.

Each droplet is allowed to fall 20cm before impacting with a Pea leaf (variety used is Lincoln pea leaves). The distance that each droplet bounces on impact is recorded and this number is used to determine the percentage of droplets that would be deflected from an average sized leaf (2.5 cm in length). Fifty droplets are tested for each test solution using 5 individual leaves (10 drops per leaf).

Improved mass deposition/reduced spray drift of the formulations is demonstrated by measuring the mass of the composition that is lost when the solution is sprayed under standard conditions.

Test solutions are sprayed into a wind tunnel (dimensions length 3 m, height 2 m, width 2.5 m). A spray head containing a 110° flat fan nozzle is mounted 60cm above the floor. Wind at 6mph (measured at the centre of the tunnel) is generated using a fan placed at a distance of 10 cm behind the nozzle. A 2.5 by 3 m collection device is positioned centrally under the spray head such that a 2.8 m length of the collection device is down wind from the nozzle. The solution to be tested is placed in a brass spray canister attached to the spray head. The canister, tubing and spray head are then weighed. A source of compressed air is used to expel the test solution through the nozzle at a pressure of 3 bar onto a pre-weighed collection device. The test solutions are sprayed for 135 seconds. The canister and spray head are then reweighed in order to determine the weight of the solution expelled. The collection device is carefully folded and reweighed. The mass of the solution collected is then calculated and used to determine the loss of spray due to drift. The results are shown in Table 1.

**Table 1**

| Formulation | Bounce (% deflected) | Spray Drift (% loss) |
|---|---|---|
| Glyphosate IPA alone | 100 | 8.3 |
| Glyphosate IPA and polymer A | 54 | 7.6 |
| Glyphosate IPA and TAE 20 | 58 | 9.8 |
| Glyphosate IPA, TAE 20 and Polymer A | 12 | 7.9 |

The results show that
■ the polymer and the surfactant reduce droplet bounce to a similar extent
■ the combination of the surfactant and polymer virtually eliminates droplet bounce
■ the inclusion a the surfactant alone increases drift and the mass of active lost
■ the inclusion of polymer decreases the amount of spray drift and increases the mass of active deposited

### Example 2

Two further polymers are tested as co-formulants within glyphosate formulations either alone or in combination with TAE 20.

Polymer B is a powder grade copolymer prepared by solution polymerisation of a monomer blend containing 80% di methyl amino ethyl acrylate (DMAEA) quaternised with Methyl Chloride and 20% acrylamide with IV 7 dl/g.

Polymer C is a powder grade copolymer containing 90% di methyl amino ethyl acrylate (DMAEA) quaternised with Methyl Chloride and 10% acrylamide with IV 8.5 dl/g.

The test methods described in example 1 are used. The polymers are included at a rate of 0.75% and the surfactant is included at a rate of 7%. All formulations are tested at a dilution rate of 1% v/v. The results are shown in Table 2.

**Table 2**

| Formulation | Bounce (% deflected) | Spray Drift (% loss) |
|---|---|---|
| Glyphosate IPAand polymer B | 88 | 7.5 |
| Glyphosate IPA, TAE 20 and Polymer B | 6 | 8 |
| Glyphosate IPA and polymer C | 42 | 8.5 |
| Glyphosate IPA, TAE 20 and Polymer C | 2 | 7.5 |

The results show that:
■ the combination of the surfactant and polymer virtually eliminates droplet bounce
■ the inclusion of polymer decreases the amount of spray drift and increases the mass of active deposited

### Example 3

Two further surfactants are tested in combination with polymer A.

Tallow amine ethoxylate (TAE) 5 mole ethoxylate supplied by Adjuvants Unlimited Inc (AU393)

Alkyl poly glycoside (APG) surfactant supplied by Cognis Inc (Agrimul 2069)

The test methods described in example 1 are used. The polymer is included at a rate of 0.75% and the TAE surfactant was included at a rate of 7%, the APG surfactant was included at a rate of 4% on solids (8% as supplied as a 50% concentrate). The results are shown in table 3.

**Table 3**

| Formulation | Bounce (% deflected) | Spray Drift (% loss) |
|---|---|---|
| Glyphosate IPA and TAE 5 | 100 | 7.8 |
| Glyphosate IPA, TAE 5 and Polymer A | 74 | 6.8 |
| Glyphosate IPA and APG | 24 | 9.5 |
| Glyphosate IPA, APG and Polymer A | 8 | 8.9 |

The results show that:
■ the combination of the surfactant and polymer reduces droplet bounce
■ the inclusion of polymer decreases the amount of spray drift and increases the mass of active deposited.

### Example 4.

Two polymers are tested in field trials in combination with a TAE surfactant.

Formulations One and Two contained 7.0% w/w TAE (approximately half the standard commercial inclusion rate for TAE) and 15% w/w TAE (the standard full commercial rate of TAE) respectively, and are tested for comparative purposes.

Formulation Two contains polymer D, a solid grade polyacrylamide homo polymer with an anionic content of 0% and an intrinsic viscosity of 16 dl/g, at a rate of 0.13% w/w with TAE at 7.0% w/w in the final formulation. The level of the polymer in the formulation is limited by the compatibility of the various components in the concentrated herbicide formulation. Results are shown for comparative purposes.

Formulation Four contains polymer B at a rate of 0.7% w/w with TAE at 7.0% w/w in the final formulation.

The above formulations contain 480 g/l glyphosate, present as the isopropyl amine salt. A random plot design of four replicates is treated with 1 pint/acre of each 480 g/l test glyphosate formulation. The plots are assessed visually for the percent control of two weeds: velvet leaf and morning glory. The assessment for morning glory is carried out 20 days post treatment. The plots receive a second treatment of Glyphosate 43 days after the initial treatment in order to control the velvet leaf. The visual assessment for the velvet leaf is carried out 14 days after the second treatment. The results of the trial are summarised below:

**Table 4**

| | % control | | |
|---|---|---|---|
| Formulation | Morning Glory | Velvet Leaf | Average |
| One | 64 | 90 | 77 |
| Two | 71 | 93 | 82 |
| Three | 71 | 86 | 79 |
| Four | 69 | 95 | 82 |

The results show that
■ The efficacy of the low TAE content formulation is lower than the high TAE content formulation in the absence of polymer
■ Polymer D improved the performance of the herbicide over TAE alone at low rate; however the formulation was not as effective as the high rate of TAE
■ Polymer C in combination with a low rate of TAE gave similar control to the TAE at full rate

## Claims

1. A pesticide or herbicide composition that is an aqueous concentrate which is dilutable to form a sprayable formulation comprising, water containing therein,
i) at least one pesticide or herbicide active and
ii) a spray drift control agent comprising at least one water-soluble cationic polymer that has been formed from ethylenically unsaturated monomers and
iii) at least one cationic surfactant,
in which the at least one cationic polymer exhibits an intrinsic viscosity of at least 4 dl/g and the cationic polymer exhibits a cationic charge density of at least 3 mEg/g and/or is formed from at least 50 wt.% cationic monomeric repeating units.

2. A composition according to claim 1 in which the at least one surfactant is present in an amount of up to 15% by weight of total composition.

3. A composition according to claim 1 or 2 in which the cationic polymer is formed from at least one ethylenically unsaturated cationic monomer and optionally a nonionic monomer.

4. A composition according to any of claims 1 to 3 which is an aqueous concentrate in which at least one cationic polymer is present in an amount of between 0.1 and 2% by weight of total composition.

5. A composition according to any of claims 1 to 3 which is a sprayable formulation in which at least one cationic polymer is present in an amount of between 25 and 150 ppm by weight of total composition.

6. A composition according to any of claims 1 to 5 comprising at least one systemic herbicide active, preferably glyphosate.

7. A composition according to any of claims 1 to 4 or 6 in which at least one pesticide or herbicide is present in an amount of between 50 and 700 g/l.

8. A method of treating a crop area or an area of land with a pesticide or herbicide which comprises providing an aqueous concentrate said aqueous concentrate comprises water and containing therein,
i) at least one pesticide or herbicide active and
ii) a spray drift control agent comprising at least one water-soluble cationic polymer that has been formed from ethylenically unsaturated monomers and
iii) at least one cationic surfactant,
diluting the aqueous concentrate in a spray tank to form a sprayable formulation and then distributing the sprayable formulation over the crop area or area of land,
in which the at least one cationic polymer exhibits an intrinsic viscosity of at least 4 dl/g and the cationic polymer exhibits a cationic charge density of at least 3 mEg/g and/or is formed from at least 50 wt.% cationic monomeric repeating units.

## Patentansprüche

1. Pestizide oder herbizide Zusammensetzung, die ein wässriges Konzentrat darstellt, das verdünnbar ist, um eine sprühfähige Formulierung zu bilden, umfassend Wasser, enthaltend darin
i) mindestens einen pestiziden oder herbiziden Wirkstoff und
ii) ein Sprühabtriebs-Steuerungsmittel, umfassend mindestens ein in Wasser lösliches, kationisches Polymer, das aus ethylenisch ungesättigten Monomeren erzeugt wurde, und
iii) mindestens ein kationisches Tensid,
wobei das mindestens eine kationische Polymer eine Grenzviskosität von mindestens 4 dl/g zeigt und das kationische Polymer eine kationische Ladungsdichte von mindestens 3 mÄq/g zeigt und/oder aus mindestens 50 Ges.-% wiederkehrenden kationischen Monomer-Einheiten gebildet ist.

2. Zusammensetzung nach Anspruch 1, worin das mindestens eine Tensid in einer Menge von bis zu 15 Gew.-% der Gesamt-Zusammensetzung vorliegt.

3. Zusammensetzung nach Anspruch 1 oder 2, worin das kationische Polymer aus mindestens einem ethylenisch ungesättigten kationischen Monomer und gegebenenfalls einem nichtionischen Monomer gebildet wird.

4. Zusammensetzung nach einem der Ansprüche 1 bis 3, die ein wässriges Konzentrat darstellt, worin mindestens ein kationisches Polymer in einer Menge von zwischen 0,1 und 2 Gew.-% der Gesamt-Zusammensetzung vorliegt.

5. Zusammensetzung nach einem der Ansprüche 1 bis 3, die eine sprühfähige Formulierung darstellt, worin mindestens ein kationisches Polymer in einer Menge von zwischen 25 und 150 ppm, auf das Gewicht der Gesamt-Zusammensetzung, vorliegt.

6. Zusammensetzung nach einem der Ansprüche 1 bis 5, umfassend mindestens einen systemischen herbiziden Wirkstoff, vorzugsweise Glyphosat.

7. Zusammensetzung nach einem der Ansprüche 1 bis 4 oder 6, worin mindestens ein Pestizid oder Herbizid in einer Menge von zwischen 50 und 700 g/l vorliegt.

8. Verfahren zum Behandeln einer Anbaufläche oder eines Ackers mit einem Pestizid oder Herbizid, das Bereitstellen eines wässrigen Konzentrats umfasst,
wobei das wässrige Konzentrat Wasser umfasst, und darin enthält
i) mindestens einen pestiziden oder herbiziden Wirkstoff und
ii) ein Sprühabtriebs-Steuerungsmittel, umfassend mindestens ein in Wasser lösliches, kationisches Polymer, das aus ethylenisch ungesättigten Monomeren erzeugt wurde, und
iii) mindestens ein kationisches Tensid,
Verdünnen des wässrigen Konzentrats in einem Sprühtank, um eine sprühfähige Formulierung zu bilden und dann Verteilen der sprühfähigen Formulierung über die Anbaufläche oder den Acker,
wobei das mindestens eine kationische Polymer eine Grenzviskosität von mindestens 4 dl/g zeigt und das kationische Polymer eine kationische Ladungsdichte von mindestens 3 mÄq/g zeigt und/oder aus mindestens 50 Gew.-% wiederkehrenden kationischen Monomer-Einheiten gebildet wird.

## Revendications

1. Composition pesticide ou herbicide qui est un concentré aqueux qui est diluable pour former une formulation pulvérisable comprenant de l'eau contenant,
i) au moins une substance pesticide ou herbicide active et
ii) un agent de régulation de la dérive se produisant lors de la pulvérisation comprenant au moins un polymère cationique hydrosoluble qui a été formé à partir de monomères éthyléniquement insaturés et
iii) au moins un agent tensioactif cationique,
dans laquelle au moins un polymère cationique présente une viscosité intrinsèque d'au moins 4 dℓ/g, le polymère cationique présentant une densité de charge cationique d'au moins 3 mEq/g et/ou étant formé d'au moins 50% en poids de motifs répétés consistant en monomères cationiques.

2. Composition selon la revendication 1, dans laquelle au moins un agent tensioactif est présent en une quantité allant jusqu'à 15% en poids de la composition totale.

3. Composition selon la revendication 1 ou 2, dans laquelle le polymère cationique est formé à partir d'au moins un monomère cationique éthyléniquement insaturé et facultativement d'un monomère non ionique.

4. Composition selon l'une quelconque des revendications 1 à 3, qui est un concentré aqueux dans lequel au moins un polymère cationique est présent en une quantité comprise entre 0,1 et 2% en poids de la composition totale.

5. Composition selon l'une quelconque des revendications 1 à 3, qui est une formulation pulvérisable dans laquelle au moins un polymère cationique est présent en une quantité comprise entre 25 et 150 ppm en poids de la composition totale.

6. Composition selon l'une quelconque des revendications 1 à 5, comprenant au moins une substance herbicide active systémique, de préférence le glyphosate.

7. Composition selon l'une quelconque des revendications 1 à 4 ou 6, dans laquelle au moins un pesticide ou herbicide est présent en une quantité comprise entre 50 et 700 g/ℓ.

8. Procédé de traitement d'une zone de culture ou d'une zone de terre avec un pesticide ou herbicide qui comprend
la fourniture d'un concentré aqueux, ledit concentré aqueux comprend de l'eau contenant
i) au moins une substance pesticide ou herbicide active et
ii) un agent de régulation de la dérive se produisant lors de la pulvérisation comprenant au moins un polymère cationique hydrosoluble qui a été formé à partir de monomères éthyléniquement insaturés et
iii) au moins un agent tensioactif cationique,
la dilution du concentré aqueux dans un réservoir de pulvérisation pour former une formulation pulvérisable puis la distribution de la formulation pulvérisable sur la zone de culture ou la zone de terre,
dans lequel au moins un polymère cationique présente une viscosité intrinsèque d'au moins 4 dℓ/g, le polymère cationique présentant une densité de charge cationique d'au moins 3 mEq/g et/ou étant formé d'au moins 50% en poids de motifs répétés consistant en monomères cationiques.
